# EUROPEAN PATENT SPECIFICATION

(11) **EP 3 537 198 B1**
(45) Date of publication and mention of the grant of the patent: **25.11.2020**
(21) Application number: 18159900.2
(22) Date of filing: 05.03.2018
(51) Int. Cl.: G02B 6/44, G02B 6/38, H02G 3/00, H02G 3/30, E05C 9/00, F16L 3/00

(54) **FIBRE-OPTIC CABLE FANOUT**
GLASFASERKABELVERZWEIGUNG
DISTRIBUTION DE CÂBLES À FIBRES OPTIQUES

(43) Date of publication of application: 11.09.2019
(73) Proprietor: Corning Research & Development Corporation, Corning, New York 14831 (US)
(72) Inventor: Lutterkordt, Ulrich, 42111 Wuppertal (DE)
(74) Representative: Epping - Hermann - Fischer

(56) References cited:
- JP-A- 2005 024 789
- US-A1- 2017 146 762

## Description

The present disclosure relates to fanout devices for fibre-optic cables, in particular to fanout devices for fibre-optic communication cables, to fibre-optic distribution cabinets and fibre-optic distribution racks comprising such fanout devices, as well as to kits of parts for assembling such cable fanouts, and to processes for attaching such cable fanouts to a support.

In certain distribution racks or distribution cabinets of larger fibre-optic communication networks, a number of optical fibres in a single multifibre cable are separated and individualized for routing them individually towards different locations or for connecting them individually to respective customer fibres. For that purpose, the multifibre cable enters a so-called fanout device or simply "fanout", inside of which the jacket of the multifibre cable is absent and the fibers are individualized by fanning the individual fibers out, i.e. giving individual fibres different directions. The individualized fibres exit the fanout at different locations and can then be individually routed towards their respective destinations, inside the rack or cabinet, or outside. An example of such a fanout device is the "DEECAM" breakout device, available from 3M™

U.S. patent application US 2005/0100286 A1 describes a two-piece housing which is part of a shuffle having a plurality of outlets, each configured to receive one optical fibre from a fibre-optic cable.

International patent application WO 2010/042507 A1 refers to a fanout cable assembly, in which the fanout is housed in a wall box.

JP 2005 024789 A relates to tension member fixture comprising a movable piece for inserting an optical fiber cable, wherein the movable piece can be releaseably fixed to a fixing part by a rotatable lock rock lever body.

US 2017/146762 A1 is directed to a slidable telecommunications tray with cable slack management comprising a fanout being mountable to a holder.

Fanout devices normally occupy fixed positions in, or close to, distribution racks/cabinets, because if a fanout device can move freely, there is a risk of the movement causing bending of the multifibre cable or the individual fibres to below their minimum bend radius, which can damage or destroy the fibres. Certain traditional fanout devices are fixed to their rack/cabinet by screws, others are simply suspended at the rack/cabinet, e.g. by a hook engaging with an aperture in a panel of the rack/cabinet.

Both methods bring some risk of fibre damage: a screwdriver, used in the vicinity of optical fibres, may slip off the screw head and hit the multifibre cable or an individual fibre. Hanging the fanout to an aperture in a panel of the rack/cabinet risks the fanout to be lifted, be released, falling and damaging fibres, when manual work is performed in the rack/cabinet.

In an attempt to provide an improved fixation of fanouts to racks/cabinets, the present disclosure provides a fibre-optic cable fanout for attachment to a support, the fanout comprising
a) a fanout input for entry into the cable fanout of an end of an optical multifibre cable comprising an outer jacket containing a plurality of individual optical fibres;
b) a fanout output for individual exit from the cable fanout of the plurality of individual optical fibres;
c) a fanout base comprising a base engagement element for engagement with the support such that the fanout base is movable relative to the support;
d) a fanout cover, connected to the fanout base such that the fanout base and the fanout cover form a fanout cavity to contain sections of the individual optical fibres;
e) a locking element, connected to the fanout cover and movable, relative to the fanout cover, so that, when the base engagement element is engaged with the support, the locking element can be moved between an unlocked position, in which the locking element is not engaged with the support and the fanout base is movable relative to the support, and a locked position, in which the locking element is engaged with the support and secures the fanout base and the fanout cover in a fixed position relative to the support;
characterized in that the locking element is slideably connected to the fanout cover and is slideably movable between the unlocked position and the locked position.

The locking element allows for a two-stage fixation of the cable fanout to the support: In a first stage, with the locking element in its unlocked position, the fanout can be movably engaged with the support via the engagement element. Because it is still movable, the fanout can easily be moved to facilitate installation of other components in a cabinet. In a second stage, with the locking element in its locked position, the cable fanout is securely attached to the support in its position and cannot move relative to the support. This secure attachment helps protect the individual fibres exiting the cable fanout against excessive bend upon inadvertent displacement of the cable fanout.

The term "cable fanout" refers to a passive device in which an input cable containing a plurality of individual optical fibres, with or without their individual sheaths, ends, and the individual optical fibres continue, without interruption by splice, splitter or connector, towards individual fibre exits. A cable fanout according to the present disclosure does not provide additional functionality such as that provided by splices, splitters, organizers, slack storage elements, or fibre-optic connectors.

Cable fanouts according to the present disclosure can be attached to supports such as interior walls, struts, or panels of fibre-optic cabinets, fibre-optic racks, patching devices, or of fibre-optic distribution devices. The support maybe, for example, a wall of a fibre-optic cabinet, or a vertical or horizontal strut of a fibre-optic rack. The support may comprise a flat support surface. The support surface may be oriented horizontally or vertically.

The support may comprise an engagement structure for engagement of the base engagement element therewith, such as, for example, an aperture, e.g. a circular aperture, a T-shaped aperture, a protrusion, a recess, a screw hole, a thread, or the like.

The support may comprise a locking aperture, adapted to engage with the locking element of the cable fanout in its locking position, to secure the fanout base and the fanout cover in a fixed position relative to the support. The locking aperture may be adapted to engage with a locking protrusion of the locking element.

Further to a (first) locking aperture as described in the previous paragraph, the support may comprise a second locking aperture, wherein the first and the second locking aperture are adapted to engage with the locking element of the cable fanout in its locking position, to secure the fanout base and the fanout cover in a fixed position relative to the support.

Alternatively to a locking aperture, or in addition, the support may comprise a locking recess, adapted to engage with the locking element of the cable fanout in its locking position, to secure the fanout base and the fanout cover in a fixed position relative to the support. The locking recess may be adapted to engage with a locking protrusion of the locking element.

Further to a (first) locking recess as described in the previous paragraph, the support may comprise a second locking recess, wherein the first and the second locking recess are adapted to engage with the locking element of the cable fanout in its locking position, to secure the fanout base and the fanout cover in a fixed position relative to the support.

The fanout input may be formed by, or comprise, an aperture or a recess in the fanout base or the fanout cover through which an end of a multifibre cable can enter the cable fanout, and in particular the fanout cavity. At the fanout input, the outer jacket of the multifibre cable is normally present. Inside the fanout cavity, the outer jacket will normally be absent to allow the individual fibres to be separated and to be routed into different directions towards their individual fibre exits of the fanout output. The fanout cavity thus also contains sections of the individual optical fibres.

A cable fanout may comprise more than one fanout input to receive more than one multifibre cable.

The fanout cavity is formed by the fanout base and the fanout cover. The fanout cover is connected to the fanout base. In certain embodiments of the present disclosure, the fanout cover is movably, connected to the fanout base.

In certain embodiments, the fanout cover is a separate element from the fanout base. The fanout cover may be connectable to the fanout base such that the fanout base and the fanout cover form a fanout cavity.

The fanout cover may generally have a concave shape such as to form the fanout cavity when connected to a generally flat or concave fanout base. Alternatively, the fanout cover may generally be flat such as to form the fanout cavity when connected to a generally concave fanout base.

The fanout cover may be connected to the fanout base by any suitable mechanism, such as by a clip, a latch, a screw, by an adhesive, or even magnetically. In certain embodiments, the fanout cover comprises cover connection means for engagement with corresponding base connections means comprised in the fanout base. Cover connection means may, for example, comprise a clip, a latch, a catch, a screw, a thread, a layer of adhesive, a hook-shaped protrusion, an engagement aperture, or a magnetic element. Base connection means may, for example, comprise a clip, a latch, a catch, a screw, a thread, a layer of adhesive, a hook-shaped protrusion, an engagement aperture, or a magnetic element.

In certain other not forming part of the invention, the fanout cover and the fanout base are formed as a single piece. In that single piece, the fanout base and the fanout cover may be connected by a living hinge, which allows pivoting the fanout cover relative to the fanout base.

In exemplary embodiments not according to the invention, and independent from the base and cover being formed as a single piece or as separate pieces, other pivot mechanisms, such as ones comprising a hinge pin, may be employed. Generally, the fanout cover may be pivotably connected to the fanout base. Where the fanout cover is pivotably connected to the fanout base, it may be pivotable between a closed pivot position, in which the fanout cover prevents access to the fanout cavity, and an open pivot position, in which the fanout cover allows access to the fanout cavity.

The fanout base may generally have a concave shape such as to form the fanout cavity when connected to a generally flat or concave fanout cover. Alternatively, the fanout base may generally be flat such as to form the fanout cavity when connected to a generally concave fanout cover.

The fanout base and/or the fanout cover may, for example, be made from metal or from a polymeric material or comprise a polymeric material.

The fanout base can be engaged, via a base engagement element, with the support such as to be movable relative to the support. In other words, after engagement, the fanout base is engaged with the support and is movable relative to the support.

The base engagement element may, for example, comprise a T-shaped protrusion. Such a T-shaped protrusion may be engaged with a corresponding T-shaped aperture in the support such that the broader end of the T-shaped protrusion is inserted into the broader end of the T-shaped aperture and such that the T-shaped protrusion is slid, in the aperture, towards the narrower end of the T-shaped aperture. The broad end of the T-shaped protrusion is too broad to slip through the narrower end of the T-shaped aperture, so that the fanout base is now engaged with the support. The T-shaped protrusion can, however, still be moved in the T-shaped aperture of the support, e.g. sideways in width direction of the narrower end of the aperture, and upwards/downwards in length direction of the aperture.

In other embodiments, the base engagement element may comprise a screw protruding from the fanout base such that the screw head is spaced from a surface of the fanout base. The support may comprise a thin flat panel, provided with a triangular aperture narrowing down from top to bottom. The screw head may be inserted into the aperture at its top where it is wide enough to let the screw head pass. The fanout base may then be moved downwards, so that the screw head is held by the narrower, lower part of the aperture. The fanout base can thus be moved relative to the support (e.g. upwards or in the direction of the screw body), while the fanout base is engaged with the support.

Generally, after engagement of the fanout base with the support via the base engagement element and before moving the locking element into the locked position, the fanout base is movable relative to the support. In certain embodiments, after engagement of the fanout base with the support via the base engagement element and before moving the locking element into the locked position, the fanout base is still movable in one specific direction relative to the support, e.g. one specific direction parallel to a surface of the support, such as in a vertical direction. The engagement of the locking element in its locked position with the support may then secure the fanout base and the fanout cover in a fixed position relative to the support by preventing movement of the fanout base and/or of the fanout cover in this one specific direction.

The fanout must allow entry of the multifibre cable and exit of the plurality of individual optical fibres. The fanout cavity may therefore comprise an input aperture forming the fanout input for entry of the optical multifibre cable into the cable fanout and/or into the fanout cavity. The fanout cavity may comprise a plurality of output apertures forming the fanout input for individual exit of the plurality of individual optical fibres from the cable fanout and/or from the fanout cavity.

The locking element is connected to the fanout cover and can be moved relative to the fanout cover between the unlocked and the locked position. In the unlocked position, when the base engagement element is engaged with the support, the fanout base is movable relative to the support, e.g. by accidental contact with an installer or a tool. By bringing the locking element from the unlocked position into the locked position, movement of the fanout base (and of the fanout cover) relative to the support is prevented and the locking element secures the fanout base and the fanout cover in a fixed position.

Generally, after engagement of the fanout base with the support via the base engagement element and before moving the locking element into the locked position, the fanout base is movable relative to the support. In certain embodiments, after engagement of the fanout base with the support via the base engagement element and before moving the locking element into the locked position, the fanout base is still movable in one specific direction relative to the support, e.g. one specific direction parallel to a surface of the support, such as in a vertical direction. The engagement of the locking element in its locked position with the support may then secure the fanout base and the fanout cover in a fixed position relative to the support by preventing movement of the fanout base and/or of the fanout cover in this one specific direction.

The shape of the locking element is not particularly limited. In certain embodiments, the locking element comprises a locking bar. Where the fanout base comprises a flat surface, the locking bar may be arranged such that, in the locked position, the locking bar protrudes in a direction generally orthogonal to the flat surface. Where the cable fanout is to be attached to a flat support such that the flat surface of the fanout base is adjacent to the flat support, this may allow for engagement of the locking bar with an aperture in the support.

The locking element may comprise a portion in the shape of a hook, a pin, in an L-shape, or in a Z-shape, for engagement with the support.

The locking element may be movable by use of tools or manually. It is desirable to avoid use of tools during installation of fibre-optic distribution devices. Manual installation is usually preferred. Therefore, in certain embodiments of the present disclosure, the locking element is manually movable, relative to the fanout cover, between the unlocked and the locked position.

In an aspect of the present disclosure, the locking element is connected to the fanout cover and movable, relative to the fanout cover. In certain embodiments, not forming part of the invention, the locking element is pivotably connected to the fanout cover. In some of these embodiments, the unlocked position of the locking element is a first pivot position (the "unlocked pivot position") of the locking element, and the locked position of the locking element is a second pivot position (the "locked pivot position") of the locking element. The locking element may thus be pivotably connected to the fanout cover and be pivotably movable between the unlocked position and the locked position. The locking element may be pivotably movable relative to the fanout cover, so that, when the base engagement element is engaged with the support, the locking element can be pivoted between the unlocked pivot position, in which the locking element is not engaged with the support and the fanout base is movable relative to the support, and the locked pivot position, in which the locking element is engaged with the support and secures the fanout base and the fanout cover in a fixed position relative to the support.

In certain alternative embodiments, not forming part of the invention, the locking element is pivotably connected to the fanout base. In some of these alternative embodiments, the unlocked position of the locking element is a first pivot position (the "unlocked pivot position") of the locking element, and the locked position of the locking element is a second pivot position (the "locked pivot position") of the locking element. The locking element may thus be connected to the fanout base and pivotably movable, relative to the fanout base, so that, when the base engagement element is engaged with the support, the locking element can be pivoted between the unlocked pivot position, in which the locking element is not engaged with the support and the fanout base is movable relative to the support, and the locked pivot position, in which the locking element is engaged with the support and secures the fanout base and the fanout cover in a fixed position relative to the support.

A hinge is a particularly straightforward way of providing a pivotable connection. Where the locking element is pivotably connected to the fanout cover, the fanout cover may thus comprise a hinge element defining a pivot axis for pivotable movement of the locking element. The locking element may be connected to the fanout cover by the hinge element. The hinge element may, for example, be a hinge pin, a hinge aperture, or a rivet attached to the fanout cover, or a protrusion formed on a surface of the fanout cover, or a pair of opposed cylindrical protrusions formed on opposed surfaces of the fanout cover. So, in certain embodiments, the fanout cover comprises a hinge element, such as a hinge aperture or a hinge pin, for pivotable connection of the locking element to the fanout cover.

Alternatively, or in addition, a hinge element may be comprised in the locking element. A hinge element on the locking element may be adapted to engage with a corresponding hinge element on the fanout cover. The hinge element may, for example, be a hinge pin, a hinge aperture, or a rivet attached to the locking element, or a protrusion formed on a surface of the locking element, or a pair of opposed cylindrical protrusions formed on opposed surfaces of the locking element. Independent of the presence or absence of a hinge element on the fanout cover, in certain embodiments, not according to the invention, the locking element comprises a hinge element, such as a hinge aperture or a hinge pin, for pivotable connection of the locking element to the fanout cover.

Where the locking element is pivotably connected to the fanout base, the fanout base may comprise a hinge element defining a pivot axis for pivotable movement of the locking element. The locking element may be connected to the fanout base by the hinge element. The hinge element may, for example, be a hinge pin attached to the fanout base, or a protrusion formed on a surface of the fanout base, or a pair of opposed cylindrical protrusions formed on opposed surfaces of the fanout base.

As an alternative to a pivoting movement, the locking element may be adapted for a sliding movement relative to the fanout cover to which it is connected. As used herein, "sliding" refers to a translational movement, during which the angular orientation of the sliding element relative to other elements remains unchanged, i.e. it does not rotate. A sliding movement is not necessarily a straight translational movement, but includes translational movements along a curved path.

In certain other embodiments, the locking element is slideably connected to the fanout cover. Where the fanout base comprises a flat base surface, the locking element may be slideable in a direction orthogonal to the flat base surface, when the fanout cover is connected to the fanout base to form the fanout cavity. Alternatively, the locking element may be slideable in a direction parallel to the flat base surface.

In some of these embodiments, the unlocked position of the locking element is a first slide position (the "unlocked slide position") of the locking element, and the locked position of the locking element is a second slide position (the "locked slide position") of the locking element. The locking element may thus be slideably connected to the fanout cover and be slideably movable between the unlocked position and the locked position. The locking element may be slideably movable relative to the fanout cover, so that, when the base engagement element is engaged with the support, the locking element can be slid between the unlocked slide position, in which the locking element is not engaged with the support and the fanout base is movable relative to the support, and the locked slide position, in which the locking element is engaged with the support and secures the fanout base and the fanout cover in a fixed position relative to the support.

In certain embodiments, the locking element is adapted, e.g. shaped or arranged, such that, in the unlocked slide position, no portion of the locking element extends beyond the contact surface of the base, and in the locked slide position, a portion of the locking element extends beyond the contact surface of the base for engagement with the support.

In certain alternative embodiments, the locking element is slideably connected to the fanout base. In some of these alternative embodiments, the unlocked position of the locking element is a first slide position (the "unlocked slide position") of the locking element, and the locked position of the locking element is a second slide position (the "locked slide position") of the locking element. The locking element may thus be connected to the fanout base and slideably movable, relative to the fanout base, so that, when the base engagement element is engaged with the support, the locking element can slide between the unlocked slide position, in which the locking element is not engaged with the support and the fanout base is movable relative to the support, and the locked slide position, in which the locking element is engaged with the support and secures the fanout base and the fanout cover in a fixed position relative to the support.

Where the locking element is slideably connected to the fanout cover, the fanout cover may comprise a guide element defining a slide direction for a slideable movement of the locking element. The locking element may be connected to the fanout cover by the guide element. The guide element may, for example, be a guide pin attached to the fanout cover, or a protrusion formed on a surface of the fanout cover, or a pair of opposed protrusions formed on opposed surfaces of the fanout cover, or an elongate guide aperture or an elongate guide recess in a surface of the fanout cover. Hence, generally, in certain embodiments, the fanout cover comprises a guide element, such as an elongate guide aperture or a guide pin, for slideable connection of the locking element to the fanout cover.

Alternatively to a guide element on the fanout cover, or in addition, a guide element may be comprised in the locking element. A guide element in the locking element may be adapted to engage with a corresponding guide element on the fanout cover. The guide element may, for example, be a guide pin attached to the locking element or formed by the locking element, or a protrusion formed on a surface of the locking element, or a pair of opposed protrusions formed on opposed surfaces of the locking element, or an elongate guide aperture or an elongate guide recess in a surface of the locking element. Hence, generally, in certain embodiments, the locking element comprises a guide element, such as an elongate aperture or a guide pin, for slideable connection of the locking element to the fanout cover.

Where the locking element is slideably connected to the fanout base, the fanout base may comprise a guide element defining a slide direction for slideable movement of the locking element. The locking element may be connected to the fanout base by the guide element. The guide element may, for example, be a guide pin attached to the fanout base, or a protrusion formed on a surface of the fanout base, or a pair of opposed protrusions formed on opposed surfaces of the fanout base.

Beyond the pivotable or slideable connections of the locking element to the fanout cover described above, other types of movable connection, not forming part of the invention, are mentioned, such as via a conformable or flexible intermediate element, or rotation, or combinations of rotation and translation.

A surface of the fanout base which is adjacent to, e.g. in contact with, the support when the cable fanout is attached to the support is also referred to herein as a "contact surface" of the fanout base. The locking element may be adapted, e.g. shaped or arranged, such that, in the unlocked pivot position, no portion of the locking element extends beyond the contact surface of the base, and in the locked pivot position, a portion of the locking element extends beyond the contact surface of the base for engagement with the support.

A particularly straightforward way of securing the cable fanout in a fixed position on the support is for a protrusion on the locking element to be received in a corresponding aperture of the support, when the locking element is in the locked position. Therefore, in certain embodiments, the locking element comprises a locking protrusion for engagement with the support, when the locking element is in the locked position.

In certain of these embodiments, the locking protrusion extends beyond the fanout base in one direction when the locking element is in the locked position, and wherein the first locking protrusion does not extend beyond the fanout base in this one direction, when the locking element is in the unlocked position. The one direction may, for example, be a direction orthogonal to a contact surface of the fanout base. A locking protrusion protruding beyond the base allows to design a particularly easy and hence cost-saving mechanism for engagement of the locking element with the support.

For more reliable securing of the fanout base and the fanout cover to the support, it may be advantageous to design the locking element such that it engages with the support in more than one location. The further these locations are spaced from each other, the better the distribution of mechanical forces in the cable fanout. Arrangement of locking protrusions on opposite edges, i.e. opposite peripheral edges, of the locking element may result in better reliability of the attachment of the fanout to the support. Therefore, in certain of the embodiments described above, the locking element further comprises a second locking protrusion for engagement with the support, when the locking element is in the locked position, the first and the second locking protrusions being arranged on opposite edges of the locking element.

The first locking protrusion and the second locking protrusion may be suitably spaced from each other to engage with corresponding first and second locking apertures or locking recesses in the support.

The material of the locking element is not particularly limited. However, the material of which the locking element is made is to be chosen suitably for the locking element to be able to secure the fanout base and the fanout cover reliably in a fixed position relative to the support. The locking element may, for example, be made of, or comprise, metal or a polymeric material. Thus, in certain embodiments, the locking element is made of metal or comprises a polymeric material.

Fibre-optic distribution cabinets and fibre-optic distribution racks that are equipped with a cable fanout as described herein are particularly easy to install and provide a particularly reliable attachment of the cable fanout to a cable fanout support. The present disclosure therefore also provides a fibre-optic distribution cabinet for separately routing individual optical fibres of a multifibre cable entering the distribution cabinet, the distribution cabinet comprising a support for a cable fanout, and a cable fanout as described herein. The present disclosure also provides a fibre-optic distribution rack for separately routing individual optical fibres of a multifibre cable entering the distribution cabinet, the distribution rack comprising a support for a cable fanout, and a cable fanout as described herein.

The cable fanout according to the present disclosure may comprise one or more fibre routing elements for routing individual fibres, or groups of individual fibres, generally from a vicinity of the fanout input towards the fanout output. Fibre routing elements may be arranged in the fanout cavity when the fanout cover is connected to the fanout base. Fibre routing elements may comprise walls, curved or straight, extending from a surface of the fanout base or from a surface of the fanout cover. Fibre routing elements may comprise pins or protrusions or arcs, extending orthogonally from a surface of the fanout base or from a surface of the fanout cover. Fibre routing elements and the fanout base may be formed as a single piece. Fibre routing elements and the fanout cover may be formed as a single piece.

Where the fanout base is flat, the T-shaped protrusion may extend orthogonally from the plane of the fanout base. This may result in the plane of the fanout base being arranged parallel to a surface of the support comprising the T-shaped aperture.

The elements of the cable fanout according to the present disclosure, i.e. fanout base, fanout cover, and locking element, may be formed as one single piece, with their movability relative to each other being provided by living hinges. Alternatively, the elements of the cable fanout may be separate pieces that can be assembled to form a cable fanout as described herein. Separate pieces may be easier to store or to ship than a complete cable fanout. The present disclosure therefore also provides a kit of parts for assembling a fibre-optic cable fanout as described herein, the kit of parts comprising
a) a fanout base comprising a base engagement element for engagement with a support such that the fanout base is movable relative to the support;
b) a fanout cover, connectable to the fanout base such that the fanout base and the fanout cover form a fanout cavity to contain sections of individual optical fibres; and
c) a locking element, connectable to the fanout cover such as to be movable, relative to the fanout cover, so that, when the base engagement element is engaged with the support, the locking element can be moved between an unlocked position, in which the locking element is not engaged with the support and the fanout base is movable relative to the support, and a locked position, in which the locking element is engaged with the support and secures the fanout base and the fanout cover in a fixed position relative to the support.

It is advantageous for an installer to have a process available for securing a fibre-optic cable fanout to a support, which provides for a particularly reliable attachment of the fanout to the support. For that purpose, the present disclosure further provides a process of securing a fibre-optic cable fanout in a fixed position on a support, comprising the steps of
a) providing a fibre-optic cable fanout as described herein, wherein the locking element is in the unlocked position;
b) engaging the fanout base with the support via the base engagement element; and
c) moving the locking element into the locked position.

The invention will now be described in more detail with reference to the following Figures exemplifying particular embodiments of the invention:
- Fig. 1: Perspective view of a known cable fanout (prior art);
- Fig. 2: Perspective view of the fanout of Fig. 1, installed in a distribution cabinet;
- Fig. 3: Perspective view of a cable fanout not according to the invention
- Fig. 4: Perspective view of the fanout of Fig. 3, secured on a support; and
- Fig. 5: Perspective view of a second cable fanout according to the present disclosure.

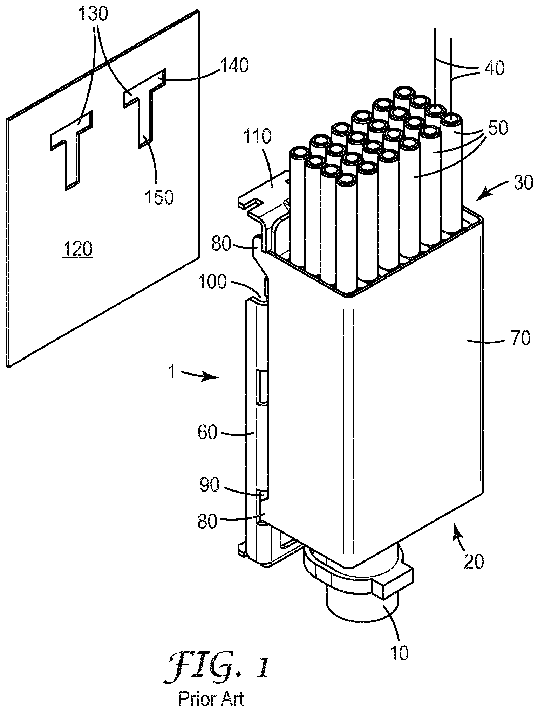

The perspective view of **Figure 1** illustrates a cable fanout 1 as is known from the prior art. An optical multifibre cable 10 enters the cable fanout 1 at a fanout input 20 at a bottom end of the cable fanout 1. The multifibre cable 10 contains twenty-four individual optical fibres 40, enveloped by a single jacket of the multifibre cable 10. The individual fibres 40 are fanned out in the cable fanout 1 and individually exit the cable fanout 1 at a fanout output 30, located at a top end (in Figure 1) of the cable fanout 1. Each of the individual optical fibres 40 is arranged in a respective protective tube 50. For clarity of the drawing, only two individual optical fibres 40 are drawn, however, in reality all twenty-four individual optical fibres 40 exit the cable fanout 1 at the fanout output 30.

The known cable fanout 1 comprises a fanout base 60 and a fanout cover 70, connected to the base 60. The fanout cover 70 comprises four hook-shaped protrusions 80, located at four corners of the fanout cover 70. These protrusions 80 form cover connection means 80, that can engage with corresponding base connection means, namely apertures 90 and recesses 100 located suitably at the periphery of the fanout base 60. The fanout base 60 and the fanout cover 70 form a fanout cavity which contains sections of the individual optical fibres 40.

The known cable fanout 1 also comprises two base engagement elements 110 for mechanical engagement with a support plate 120, which is provided with two T-shaped apertures 130. The base engagement elements 110 can be engaged with the support plate 120 by inserting them into the wider upper portions 140 of the apertures 130 and then push them into the narrower lower portions 150 of the apertures 130. In that lower position, the fanout base 60 is still movable relative to the support plate 120, at least in the upward direction.

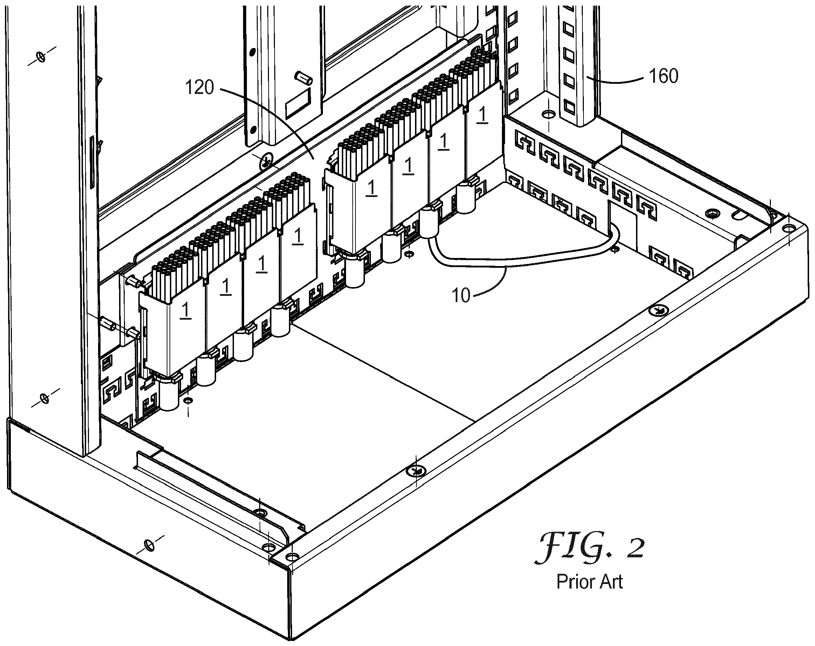

**Figure 2** shows, in a perspective view, eight of the known cable fanouts 1, arranged next to each other and engaged with a support plate 120 at the bottom of a fibre-optic distribution cabinet 160. Only one multifibre cable 10 is shown for reasons of clarity. No individual fibres 40 exiting the fanouts 1 are shown.

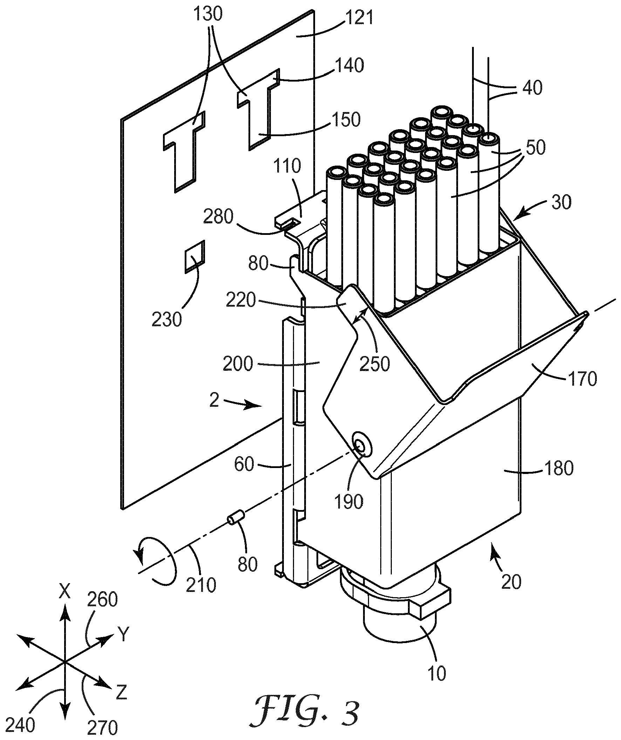

A cable fanout 2 not according to the present invention, is shown in perspective view in **Figure 3****.** It is similar to the cable fanout shown in Figure 1 (and like reference numbers indicate like elements), except that it comprises a locking element 170, connected to the fanout cover 180, by which the fanout base 60 and the fanout cover 180 can be secured to the support plate 121, which is a thin metal plate. The locking element 170 is pivotably connected to the fanout cover 180 via two rivets 190 on opposed side surfaces 200 of the fanout cover 180. The rivets 190 (of which only one is visible in Figure 3) define a pivot axis 210 about which pivot axis 210 the locking element 170 can be pivotably moved relative to the fanout cover 180. The locking element 170 comprises corresponding hinge openings (not visible in Figure 3) which engage with the rivets 190 to allow pivoting movement about the rivets 190.

The locking element 170 is shown in the unlocked pivot position and before engagement of the T-shaped base engagement elements 110 with corresponding T-shaped apertures 130 in the support plate 121. For securing the fanout cover 180 and the fanout base 60 on the support plate 121, the locking element 170 comprises locking protrusions 220 on opposed sides. In the unlocked pivot position shown in Figure 3, these locking protrusions 220 do not protrude beyond the fanout base 60.

The width of the narrower lower portions 150 of the T-shaped apertures 130 is selected to match the extension of the waist portions 280 of the T-shaped base engagement elements 110. Engagement of the base engagement elements 110 with the T-shaped apertures 130 thus results in securement of the cable fanout 2 on the support plate 121 both in lateral directions (y-directions) indicated by arrow 260, and in thickness directions (z-directions) indicated by arrow 270. The cable fanout 2, however, remains movable relative to the support plate 121, in upward direction 240.

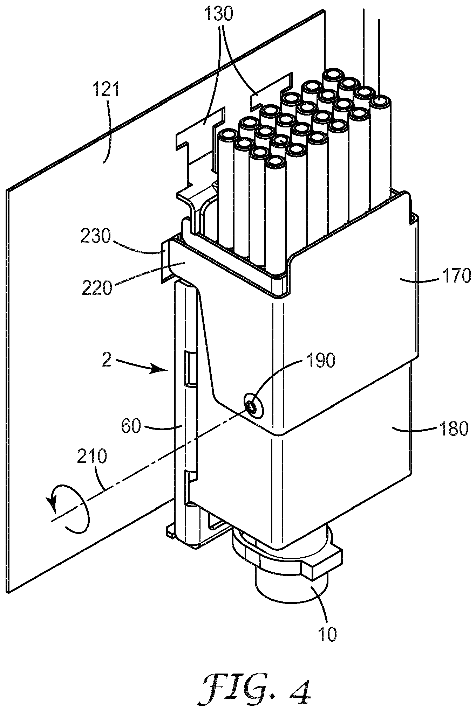

The engagement of the locking element 170 with the support plate 121 removes this last degree of freedom for upward/downward movement of the cable fanout 2. The support plate 121 is provided with two locking apertures 230, which are suitably sized, shaped and spaced to engage with the locking protrusions 220, when the locking element 170 is in the locked position, shown in Figure 4. Only one of the locking apertures 230 is visible in Figure 3. The size of the locking apertures 230 in up-down direction ("x-direction") indicated by arrow 240 is slightly larger than the extension 250 of the locking protrusion 220 of the locking element 170 in that direction 240 to allow for easy pivoting into the locking apertures 230, but also for reliable securement of the cable fanout 2 relative to the support plate 121 in up-down direction 240.

**Figure 4** shows, in a further perspective view, the cable fanout 2 of Figure 3 with its locking element 170 in the locked position. For attaching the cable fanout 2 to the support plate 121, two engagement actions are performed consecutively. First, with the locking element 170 in the unlocked position, the T-shaped base engagement elements 110 are inserted into the wider upper portions 140 of the T-shaped engagement apertures 130 and moved in downward direction 240, so that the waist portions 280 engage with the support plate 121 in the narrower lower portions 150 of the T-shaped engagement apertures 130.

Then, the locking element 170 is pivoted about pivot axis 210, relative to the fanout cover 180, towards the support plate 121, so that the locking protrusions 220 are inserted into the corresponding locking apertures 230. In this locked position of the locking element 170, the locking element 170 is engaged with the support plate 121. The locking element 170, by its engagement, prevents movement of the cable fanout 2 in an upward direction 240 and thereby secures the fanout base 60 and the fanout cover 180 in a fixed position relative to the support plate 121. Also the fanout base 60 is secured in the fixed position, because the fanout cover 180 is connected to the fanout base 60 by four hook-shaped protrusions 80, located at four corners of the fanout cover 180 and engaged with corresponding openings and recesses in the fanout base 60.

For removal of the cable fanout 2 from the support plate 121, the locking element 170 can be pivoted back, away from the fanout base 60, whereby the locking protrusions 220 are retracted from the locking apertures 230. Thereafter, the cable fanout 2 can be pushed upwards in x-direction 240 relative to the support plate 121, until the T-shaped base engagement elements 110 are in the wider upper portions 140 of the T-shaped apertures 130, and can then be retracted from the T-shaped apertures 130, which releases the cable fanout 2 from the support plate 121.

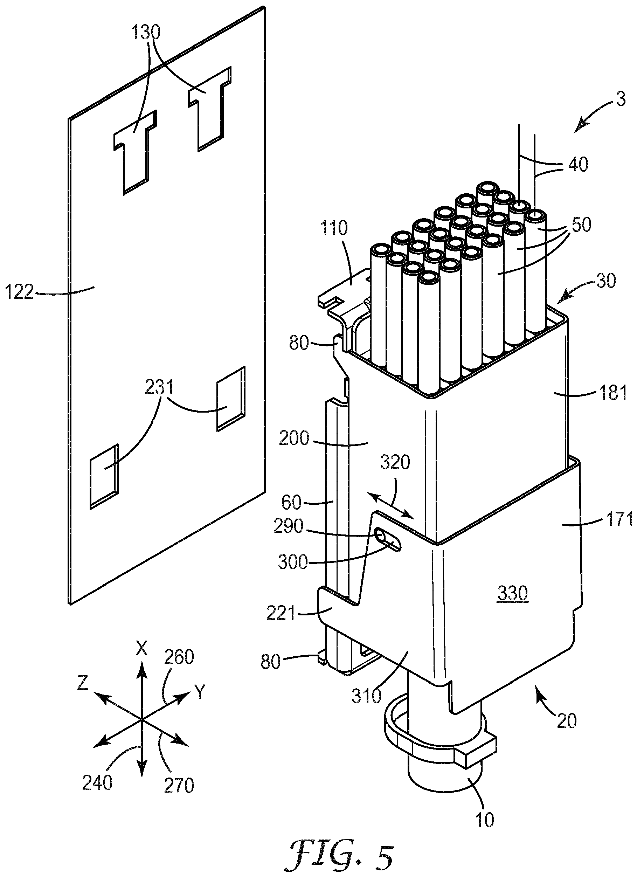

A second, alternative cable fanout 3 according to the invention is illustrated, in perspective view, in Figure 5. Most elements of the second cable fanout 3 are identical to corresponding elements of the first cable fanout 2 of Figures 3 and 4 and will therefore not be explained again.

While the first cable fanout 2 had a pivotable locking element 170, the second fanout 3 comprises a slideable locking element 171, arranged at the fanout input 20 of the cable fanout 3. The locking element 171 is connected to the fanout cover 181 by a pair of opposed cylindrical protrusions 290 formed on opposed side surfaces 200 of the fanout cover 181, and a corresponding pair of slots 300 in opposed lateral surfaces 310 of the locking element 171. Due to the perspective view, only one lateral surface 310, one cylindrical protrusion 290 and one slot 300 are visible in Figure 5.

The second cable fanout 3 is shown with the locking element 171 being in the unlocked position and the T-shaped base engagement elements 110 not engaged with the support plate 122. The locking element 171 is slideably movable relative to the fanout cover 181, in a slide direction 320 orthogonal to the flat fanout base 60. The locking element 171 comprises two opposed locking protrusions 221 for engagement with the support plate 122. In the unlocked position, the locking protrusions 221 do not protrude beyond the fanout base 60, so that the fanout base 60 can be brought into a position adjacent and parallel to the support plate 122.

For fixation of the second cable fanout 3 to the support plate 122, first the T-shaped base engagement elements 110 are engaged with the T-shaped apertures 130 as described above for the first cable fanout 2.

Then, the locking element 171 is slid, relative to the fanout cover 181, in sliding direction 320, defined by the length direction of slot 300, towards the fanout base 60 by applying manual pressure on its top surface, 330, towards the support plate 121, so that the locking protrusions 221 enter corresponding locking apertures 231 in the support plate 122. In this locked position of the locking element 171, the locking element 171 is engaged with the support plate 122. The locking element 171, by this engagement, prevents movement of the second cable fanout 3 in an upward direction 240 and thereby secures the fanout base 60 and the fanout cover 181 in a fixed position relative to the support plate 122. Again, also the fanout base 60 is secured in the fixed position, because the fanout cover 181 is connected to the fanout base 60 by four hook-shaped protrusions 80, located at four corners of the fanout cover 180 and engaged with corresponding openings and recesses in the fanout base 60.

For removal of the cable fanout 3 from the support plate 122, the locking element 171 can be slid back, in sliding direction 320, away from the fanout base 60, whereby the locking protrusions 221 are retracted from the locking apertures 231. Thereafter, the cable fanout 3 can be pushed upwards in x-direction 240 relative to the support plate 122, until the T-shaped base engagement elements 110 are in the wider upper portions 140 of the T-shaped apertures 130, and can then be retracted from the T-shaped apertures 130, which releases the cable fanout 3 from the support plate 122.

## Claims

1. Fibre-optic cable fanout (2, 3) for attachment to a support (121, 122), the fanout comprising
a) a fanout input (20) for entry into the cable fanout of an end of an optical multifibre cable (10) comprising an outer jacket containing a plurality of individual optical fibres (40);
b) a fanout output (30) for individual exit from the cable fanout of the plurality of individual optical fibres (40);
c) a fanout base (60) comprising a base engagement element (110) for engagement with the support such that the fanout base is movable relative to the support;
d) a fanout cover (180, 181), connected to the fanout base such that the fanout base and the fanout cover form a fanout cavity to contain sections of the individual optical fibres;
e) a locking element (170, 171), connected to the fanout cover (180, 181) and movable, relative to the fanout cover, so that, when the base engagement element (110) is engaged with the support (121, 122), the locking element can be moved between
an unlocked position, in which the locking element is not engaged with the support and the fanout base is movable relative to the support, and
a locked position, in which the locking element is engaged with the support and secures the fanout base and the fanout cover in a fixed position relative to the support;
**characterized in that** the locking element (171) is slideably connected to the fanout cover (181) and is slideably movable between the unlocked position and the locked position such that the locking element (171) performs a translational movement during which the angular orientation of the locking element (171) relative to the fanout base (60) and the fanout cover (180, 181) remains unchanged.

2. Fibre-optic cable fanout (2, 3) according to claim 1, wherein the locking element (170, 171) is manually movable, relative to the fanout cover (180, 181), between the unlocked and the locked position.

3. Fibre-optic cable fanout (2, 3) according to any one of the preceding claims, wherein the locking element (170, 171) comprises a first locking protrusion (220, 221) for engagement with the support (121, 122), when the locking element is in the locked position.

4. Fibre-optic cable fanout (2, 3) according to claim 3, wherein the first locking protrusion (220, 221) extends beyond the fanout base (60) in one direction (270) when the locking element (170, 171) is in the locked position, and wherein the first locking protrusion (220, 221) does not extend beyond the fanout base (60) in this one direction (270), when the locking element is in the unlocked position.

5. Fibre-optic cable fanout (2, 3) according to claim 3 or claim 4, wherein the locking element (170, 171) further comprises a second locking protrusion for engagement with the support (121, 122), when the locking element is in the locked position, the first and the second locking protrusions (220, 221) being arranged on opposite edges of the locking element.

6. Fibre-optic cable fanout (3) according to claim 1, wherein the fanout cover (181) comprises a guide element (290), such as an elongate guide aperture or a guide pin, for slideable connection of the locking element (171) to the fanout cover.

7. Fibre-optic cable fanout (3) according to claim 1 or claim 6, wherein the locking element (171) comprises a guide element, such as an elongate guide aperture or a guide pin, for slideable connection of the locking element to the fanout cover.

8. Fibre-optic cable fanout (2, 3) according to any one of the preceding claims, wherein the locking element (170, 171) is made of metal or comprises a polymeric material.

9. Fibre-optic distribution cabinet (160) for separately routing individual optical fibres (40) of a multifibre cable (10) entering the distribution cabinet, the distribution cabinet comprising a support (121, 122) for a cable fanout, and a cable fanout (2, 3) according to any one of the preceding claims.

10. Process of securing a fibre-optic cable fanout (2, 3) in a fixed position on a support (121, 122), comprising the steps of
a) providing a fibre-optic cable fanout (2, 3) according to any one of claims 1 to 9, wherein the locking element (170, 171) is in the unlocked position;
b) engaging the fanout base (60) with the support via the base engagement element (110); and
c) moving the locking element into the locked position.

## Patentansprüche

1. Glasfaserkabelverzweigung (2, 3) zur Anbringung an einem Träger (121, 122), wobei die Verzweigung umfasst:
a) einen Verzweigungseingang (20) zum Eintritt in die Kabelverzweigung eines Endes eines optischen Mehrfaserkabels (10), das einen Außenmantel umfasst, der mehrere einzelne optische Fasern (40) enthält;
b) einen Verzweigungsausgang (30) zum Einzelaustritt aus der Kabelverzweigung der mehreren einzelnen optischen Fasern (40) ;
c) eine Verzweigungsbasis (60), die ein Basiseingriffselement (110) zum Eingriff mit dem Träger umfasst, derart, dass die Verzweigungsbasis in Bezug auf den Träger beweglich ist;
d) eine Verzweigungsabdeckung (180, 181), die derart an die Verzweigungsbasis angeschlossen ist, dass die Verzweigungsbasis und die Verzweigungsabdeckung einen Verzweigungshohlraum bilden, um Abschnitte der einzelnen optischen Fasern zu enthalten;
e) ein Verriegelungselement (170, 171), das an die Verzweigungsabdeckung (180, 181) angeschlossen und in Bezug auf die Verzweigungsabdeckung beweglich ist, so dass, wenn das Basiseingriffselement (110) mit dem Träger (121, 122) in Eingriff ist, das Verriegelungselement bewegt werden kann zwischen
einer entriegelten Stellung, in der das Verriegelungselement nicht mit dem Träger in Eingriff und die Verzweigungsbasis in Bezug auf den Träger beweglich ist, und
einer verriegelten Stellung, in der das Verriegelungselement mit dem Träger in Eingriff ist und die Verzweigungsbasis und die Verzweigungsabdeckung in einer festen Stellung in Bezug auf den Träger sichert;
**dadurch gekennzeichnet, dass** das Verriegelungselement (171) verschiebbar an die Verzweigungsabdeckung (181) angeschlossen und verschiebbar zwischen der entriegelten Stellung und der verriegelten Stellung beweglich ist, derart, dass das Verriegelungselement (171) eine Translationsbewegung vollführt, während der die Winkelausrichtung des Verriegelungselements (171) in Bezug auf die Verzweigungsbasis (60) und die Verzweigungsabdeckung (180, 181) unverändert bleibt.

2. Glasfaserkabelverzweigung (2, 3) nach Anspruch 1, wobei das Verriegelungselement (170, 171) manuell in Bezug auf die Verzweigungsabdeckung (180, 181) zwischen der entriegelten Stellung und der verriegelten Stellung beweglich ist.

3. Glasfaserkabelverzweigung (2, 3) nach einem der vorhergehenden Ansprüche, wobei das Verriegelungselement (170, 171) einen ersten Verriegelungsvorsprung (220, 221) zum Eingriff mit dem Träger (121, 122), wenn das Verriegelungselement in der verriegelten Stellung ist, umfasst.

4. Glasfaserkabelverzweigung (2, 3) nach Anspruch 3, wobei sich der erste Verriegelungsvorsprung (220, 221) in einer Richtung (270) über die Verzweigungsbasis (60) hinaus erstreckt, wenn das Verriegelungselement (170, 171) in der verriegelten Stellung ist, und wobei sich der erste Verriegelungsvorsprung (220, 221) in dieser einen Richtung (270) nicht über die Verzweigungsbasis (60) hinaus erstreckt, wenn das Verriegelungselement in der entriegelten Stellung ist.

5. Glasfaserkabelverzweigung (2, 3) nach Anspruch 3 oder Anspruch 4, wobei das Verriegelungselement (170, 171)darüber hinaus einen zweiten Verriegelungsvorsprung zum Eingriff mit dem Träger (121, 122), wenn das Verriegelungselement in der verriegelten Stellung ist, umfasst, wobei der erste und der zweite Verriegelungsvorsprung (220, 221) an entgegengesetzten Kanten des Verriegelungselements angeordnet sind.

6. Glasfaserkabelverzweigung (3) nach Anspruch 1, wobei die Verzweigungsabdeckung (181) ein Führungselement (290) wie etwa eine langgestreckte Führungsöffnung oder einen Führungsstift zum verschiebbaren Anschluss des Verriegelungselements (171) an die Verzweigungsabdeckung umfasst.

7. Glasfaserkabelverzweigung (3) nach Anspruch 1 oder Anspruch 6, wobei das Verriegelungselement (171) ein Führungselement wie etwa eine langgestreckte Führungsöffnung oder einen Führungsstift zum verschiebbaren Anschluss des Verriegelungselements an die Verzweigungsabdeckung umfasst.

8. Glasfaserkabelverzweigung (2, 3) nach einem der vorhergehenden Ansprüche, wobei das Verriegelungselement (170, 171) aus Metall hergestellt ist oder ein Polymermaterial umfasst.

9. Glasfaserverteilerschrank (160) zum separaten Führen von einzelnen optischen Fasern (40) eines Mehrfaserkabels (10), das in den Verteilerschrank eintritt, wobei der Verteilerschrank einen Träger (121, 122) für eine Kabelverzweigung und eine Kabelverzweigung (2, 3) nach einem der vorhergehenden Ansprüche umfasst.

10. Verfahren zum Sichern einer Glasfaserkabelverzweigung (2, 3) in einer festen Stellung an einem Träger (121, 122), die folgenden Schritte umfassend:
a) Bereitstellen einer Glasfaserkabelverzweigung (2, 3) nach einem der Ansprüche 1 bis 9, wobei das Verriegelungselement (170, 171) in der entriegelten Stellung ist;
b) in Eingriff Bringen der Verzweigungsbasis (60) mit dem Träger über das Basiseingriffselement (110); und
c) Bewegen des Verriegelungselements in die verriegelte Stellung.

## Revendications

1. Épanouisseur de câble à fibres optiques (2, 3) destiné à être fixé à un support (121, 122), l'épanouisseur comprenant
a) une entrée d'épanouisseur (20) pour faire entrer dans l'épanouisseur de câble une extrémité d'un câble à fibres optiques multiples (10) comprenant une gaine extérieure contenant une pluralité de fibres optiques (40) individuelles ;
b) une sortie d'épanouisseur (30) pour faire sortir de l'épanouisseur de câble la pluralité de fibres optiques (40) individuelles ;
c) une embase d'épanouisseur (60) comprenant un élément de mise en prise d'embase (110) destiné à être mis en prise avec le support de telle sorte que l'embase d'épanouisseur soit mobile par rapport au support ;
d) un couvercle d'épanouisseur (180, 181) connecté à l'embase d'épanouisseur de telle sorte que l'embase d'épanouisseur et le couvercle d'épanouisseur forment une cavité d'épanouisseur pour contenir des sections des fibres optiques individuelles ;
e) un élément de verrouillage (170, 171) connecté au couvercle d'épanouisseur (180, 181) et mobile par rapport au couvercle d'épanouisseur de sorte que, lorsque l'élément de mise en prise d'embase (110) est mis en prise avec le support (121, 122), l'élément de verrouillage puisse être déplacé entre
une position déverrouillée, dans laquelle l'élément de verrouillage n'est pas mis en prise avec le support et l'embase d'épanouisseur est mobile par rapport au support, et
une position verrouillée, dans laquelle l'élément de verrouillage est mis en prise avec le support et fixe l'embase d'épanouisseur et le couvercle d'épanouisseur dans une position fixe par rapport au support ;
**caractérisé en ce que** l'élément de verrouillage (171) est connecté de manière coulissante au couvercle d'épanouisseur (181) et est mobile de manière coulissante entre la position déverrouillée et la position verrouillée de telle sorte que l'élément de verrouillage (171) effectue un mouvement de translation lors duquel l'orientation angulaire de l'élément de verrouillage (171) par rapport à l'embase d'épanouisseur (60) et au couvercle d'épanouisseur (180, 181) reste inchangée.

2. Épanouisseur de câble à fibres optiques (2, 3) selon la revendication 1, sachant que l'élément de verrouillage (170, 171) est mobile manuellement, par rapport au couvercle d'épanouisseur (180, 181), entre la position déverrouillée et la position verrouillée.

3. Épanouisseur de câble à fibres optiques (2, 3) selon l'une quelconque des revendications précédentes, sachant que l'élément de verrouillage (170, 171) comprend une première saillie de verrouillage (220, 221) destinée à être mise en prise avec le support (121, 122) lorsque l'élément de verrouillage est dans la position verrouillée.

4. Épanouisseur de câble à fibres optiques (2, 3) selon la revendication 3, sachant que la première saillie de verrouillage (220, 221) s'étend au-delà de l'embase d'épanouisseur (60) dans une direction (270) lorsque l'élément de verrouillage (170, 171) est dans la position verrouillée, et sachant que la première saillie de verrouillage (220, 221) ne s'étend pas au-delà de l'embase d'épanouisseur (60) dans cette direction (270) lorsque l'élément de verrouillage est dans la position déverrouillée.

5. Épanouisseur de câble à fibres optiques (2, 3) selon la revendication 3 ou la revendication 4, sachant que l'élément de verrouillage (170, 171) comprend en outre une deuxième saillie de verrouillage destinée à être mise en prise avec le support (121, 122) lorsque l'élément de verrouillage est dans la position verrouillée, la première et la deuxième saillie de verrouillage (220, 221) étant agencées sur des bords opposés de l'élément de verrouillage.

6. Épanouisseur de câble à fibres optiques (3) selon la revendication 1, sachant que le couvercle d'épanouisseur (181) comprend un élément de guidage (290), tel qu'un orifice de guidage allongé ou un pion de guidage, pour la connexion coulissante de l'élément de verrouillage (171) au couvercle d'épanouisseur.

7. Épanouisseur de câble à fibres optiques (3) selon la revendication 1 ou la revendication 6, sachant que l'élément de verrouillage (171) comprend un élément de guidage, tel qu'un orifice de guidage allongé ou un pion de guidage, pour la connexion coulissante de l'élément de verrouillage au couvercle d'épanouisseur.

8. Épanouisseur de câble à fibres optiques (2, 3) selon l'une quelconque des revendications précédentes, sachant que l'élément de verrouillage (170, 171) est composé de métal ou comprend un matériau polymère.

9. Armoire de distribution de fibres optiques (160) destinée à acheminer séparément des fibres optiques (40) individuelles d'un câble à fibres multiples (10) entrant dans l'armoire de distribution, l'armoire de distribution comprenant un support (121, 122) pour un épanouisseur de câble, et un épanouisseur de câble (2, 3) selon l'une quelconque des revendications précédentes.

10. Procédé de fixation d'un épanouisseur de câble à fibres optiques (2, 3) dans une position fixe sur un support (121, 122), comprenant les étapes de
a) mise à disposition d'un épanouisseur de câble à fibres optiques (2, 3) selon l'une quelconque des revendications 1 à 9, sachant que l'élément de verrouillage (170, 171) est dans la position déverrouillée ;
b) mise en prise de l'embase d'épanouisseur (60) avec le support via l'élément de mise en prise d'embase (110) ; et
c) déplacement de l'élément de verrouillage à la position verrouillée.
